# EUROPEAN PATENT SPECIFICATION

(11) **EP 1 617 658 B1**
(45) Date of publication and mention of the grant of the patent: **07.05.2008**
(21) Application number: 05015457.4
(22) Date of filing: 15.07.2005
(51) Int. Cl.: H04N 5/57, H04N 5/74, H04N 7/14, H04N 9/67, G09G 3/32, G09G 3/34

(54) **Enhanced image display**
Verbessertes Bildanzeigegerät
Dispositif d'affichage d'images amélioré

(30) Priority: 16.07.2004 KR 2004055719
(43) Date of publication of application: 18.01.2006
(73) Proprietor: LG Electronics Inc., Yongdungpo-gu Seoul (KR)
(72) Inventor: Lee, Jae-Min, Gunpo Gyeonggi-Do (KR)
(74) Representative: Beyer, Andreas

(56) References cited:
- US-A1- 2002 047 550
- US-A1- 2002 075 216
- US-A1- 2003 234 795
- US-A1- 2004 104 883
- US-A1- 2004 257 352
- US-B1- 6 542 143

## Description

### FIELD OF THE INVENTION

The present invention relates generally to an image display and, more particularly, to enhancing display quality of inputted image signals in a mobile terminal.

### BACKGROUND OF THE INVENTION

Mobile terminals typically include a display device, such as a liquid crystal display (LCD). When a user attempts to view an image stored in the mobile terminal or image data inputted from a camera, the mobile terminal converts the input image data into a RGB (Red-Green-Blue) or YUV (e.g., PAL system) signal, adjusts the converted signal according to a gray level of brightness, and differentially applies a voltage corresponding to the RGB or YUV signal by the gray level, thereby displaying the image data on the LCD. Normally, the YUV signal has 16bits, 18bits or 24bits. When the converted YUV signal has 18bits, the gray level number of the YUV signal is 512.

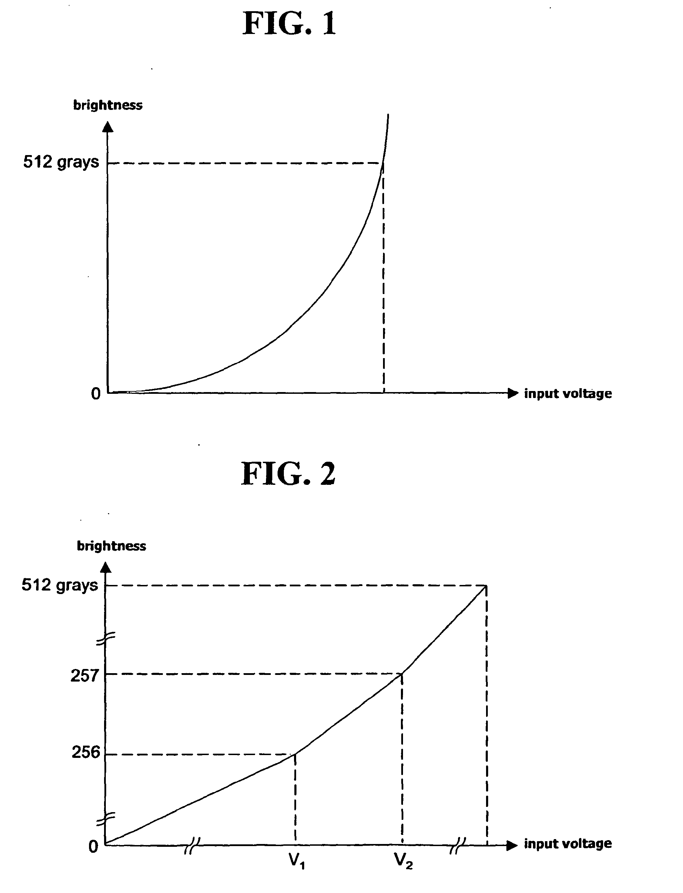

Fig. 1 is a graph showing a relationship between gray levels and input voltages.

Referring to Fig. 1, when an YUV signal inputted to an LCD having a predetermined γ value has 18bits, the voltages inputted by the gray levels increase by the rise of the gray levels. In a typical display device, a γ curve may be represented by y=Xγ', and in the case of a cathode ray tube (CRT) monitor, a γ curve has a γ value of '2.2'.

Generally, the γ curve is used to display externally-inputted image data on the LCD, and is provided by the manufacturer of the display device. In addition, the γ curve, which is based on the γ value, is used to vary the input voltage according to the brightness level of the input image data.

Fig. 2 is a graph showing a relationship between gray levels and input voltages in each gray level.

Referring to Fig. 2, the input voltages linearly increase according to the number of the gray levels. For example, Fig. 2 shows gray levels 256 and 257, out of a maximum 512 gray levels. A voltage of V1 is inputted in gray 256 and a voltage of V2 is inputted in gray 257.

However, the voltages inputted by the gray levels are restricted regardless of the brightness values of the image signal. Moreover, since the input voltages are restricted due to the linear increase of the γ curve, the brightness of the real image does not completely match the γ curve. As a result, the image displayed on the LCD is different from the real image.

US 2002/0047550 A1 discloses a self light emitting device having a function for correcting drops in brightness in self light emitting elements in a pixel portion and capable of displaying a uniform image without brightness irregularities. A specific test pattern is displayed, brightnesses are detected by photo electric conversion elements arranged in each pixel, and then stored in a memory circuit. A correction circuit then corrects a first image signal based on portions which are insufficient from standard brightness, i.e. brightnesses of normal self light emitting elements at the same gray scale stored in advance, and a second image signal is obtained. Displaying of an image In a display device is performed in accordance with the second image signal. In the case of a self light emitting device having a six bit digital gray scale (64 gray scales) and a brightness correction function, one bit of processing capability is added as superimposition means for performing a correction. This is effectively designed as seven bit digital gray scales (128 gray scales) and in normal operation the lower six bits are used. If an electroluminescence element develops degradation, the corrective value is added to the normal digital image signal and signal processing of the added portion is performed using one bit of superimposition. The most significant bit is used only for signal correction in this case and the actual display gray scale is six bit.

US 2004/0104883 A1 discloses a method for adjusting a γ setting of a display for a mobile device. The display has two brightness settings, namely a transmissive mode setting and a reflective mode setting.

US 2003/0234795 A1 discloses that pixels in a YUV format including a Y component representing the luminance, and U and V components representing chrominance are converted into a RGB format including R, G and B components respectively representing red, green and blue colors in order to display images on a video display device. The pixels from the YUV format are converted to the RGB format using color look-up tables with a small memory capacity.

US 6,542,143 B1 discloses a high performance display element driving device which can be easily reduced in power consumption and scale. Data drivers include means which, when digital data of a YUV signal is input, directly convert the digital data into analogue applied voltages for red, green and blue to output the analogue applied voltages and, when digital data of the RGB signal is input, convert the digital data into analogue applied voltages for red, green and blue to output the applied voltage. The data drivers can be applied in a γ-correction of a liquid crystal.

### SUMMARY OF THE INVENTION

Accordingly, the present invention is directed to an image display that substantially obviates one or more problems due to limitations and disadvantages of the related art.

An object of the present invention is to provide an image display device and method which may display an image like a real image by controlling brightness values of an image signal.

Another object of the present invention is to display an image like a real image by subdividing a γ curve of an image signal and applying different voltages according to the subdivided γ curves.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a display device comprises a data input unit configured to convert an image signal to a color signal. The display device also comprises a brightness control unit operationally coupled to the data input unit, configured to extract a brightness level associated with the color signal, to subdivide the brightness level associated with the color signal, and to apply different voltages according to brightness level subdivisions to control brightness of the color signal. The display device also comprises a display unit configured to display the color signal according to controlled brightness.

The brightness level may comprise gray levels of a γ curve. The color signal may comprise one of YUV or RGB signals. The brightness control unit may comprise means for extracting maximum and minimum brightness values of the color signal and means for subdividing the brightness level using the maximum and minimum brightness values. The brightness control unit may also comprise means for subdividing voltage sections associated with brightness level subdivisions and means for mapping brightness values associated with the brightness level subdivisions to the voltage sections. The brightness control unit may further comprise means for calculating a difference value between the maximum and minimum brightness values. The means for mapping the brightness values may obtain brightness distribution maps by mapping the brightness values one to one. The voltage sections may be set by the brightness distribution maps. The brightness may be controlled by applying voltages by set voltage sections. A number of voltage sections may be equal to a number of the brightness distribution maps. A number of voltage sections may be equal to a number of high distribution maps.

In another embodiment, a display method comprises converting an image signal to a color signal and extracting a brightness level associated with the color signal. The display method also comprises controlling brightness of the color signal by subdividing the brightness level and applying different voltages according to brightness level subdivisions. The display method also comprises displaying the color signal according to controlled brightness.

The step of controlling brightness of the color signal may comprise extracting maximum and minimum brightness values of the color signal and subdividing the brightness level using the maximum and minimum brightness values. The step of controlling brightness of the color signal may also comprise subdividing voltage sections associated with brightness level subdivisions and mapping brightness values associated with the brightness level subdivisions to the voltage sections. The step of controlling brightness of the color signal may further comprise calculating a difference value between the maximum and minimum brightness values. The step of mapping brightness values associated with the brightness level subdivisions to the voltage sections may further comprise obtaining brightness distribution maps by mapping the brightness values one to one.

In yet another embodiment, a mobile terminal configured to display images comprises a transceiver configured to transmit and receive signals and a display device operationally coupled to the transceiver. The display device comprises a data input unit configured to convert an image signal to a color signal. The display device also comprises a brightness control unit operationally coupled to the data input unit, configured to extract a brightness level associated with the color signal, to subdivide the brightness level associated with the color signal, and to apply different voltages according to brightness level subdivisions to control brightness of the color signal. The display device also comprises a display unit configured to display the color signal according to controlled brightness.

The image signal may be provided by the transceiver to the data input unit. The mobile terminal may further comprise a camera operationally coupled to the display device, configured to provide the image signal to the data input unit. The mobile terminal may further comprise a memory operationally coupled to the display device and the camera, configured to store image data associated with an image signal provided by the camera, the image data to provide an image signal to the data input unit.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

Fig. 1 is a graph showing a relationship between gray levels and input voltages.

Fig. 2 is a graph showing a relationship between gray levels and input voltages in each gray level.

Fig. 3 is a block diagram illustrating an image display device for an LCD device, according to an embodiment of the present invention.

Fig. 4 is a graph showing a relationship between gray levels and input voltages, according to an embodiment of the present invention.

Fig. 5 is a flow diagram illustrating an image display method for an LCD device, according to an embodiment of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

In one embodiment, an image is displayed like a real image by applying a variable γ curve according to brightness values of RGB (Red-Green-Blue) or YUV (e.g., PAL system) signals. The present invention may preferably be used in a mobile terminal.

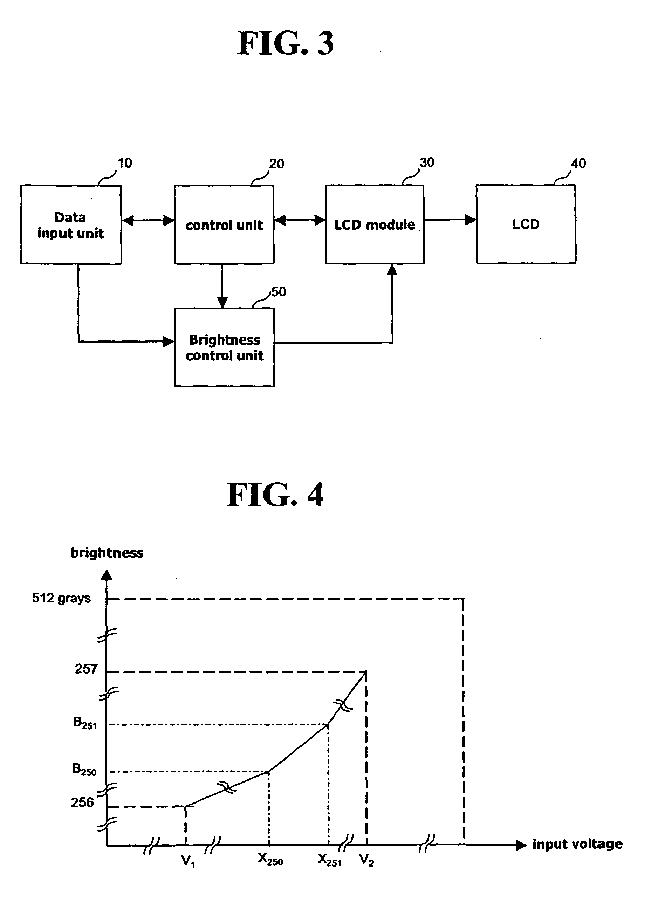

Fig. 3 is a block diagram illustrating an image display device for an LCD device, according to an embodiment of the present invention.

Referring to Fig. 3, the image display device includes a data input unit 10, a control unit 20, an LCD module 30, an LCD 40 and a brightness control unit 50. The LCD 40 may be a built-in LCD.

The image display device in accordance with the present invention is described in detail below. When a user attempts to view an image inputted from a camera or an image stored in a storage device of a mobile terminal using the LCD 40, the data input unit 10 converts the image signal from the camera or the storage device into an RGB or YUV signal, and transmits the converted signal to the brightness control unit 50. The brightness control unit 50 extracts maximum and minimum brightness values and voltages applied in each gray level by the brightness level from the signal. The brightness control unit 50 subdivides a γ curve applied to each gray level by using the extracted minimum brightness value and a difference value between the maximum and minimum brightness values, and sets voltage sections by the subdivided γ curves. In addition, the brightness control unit 50 controls brightness by applying different voltages by the set voltage sections, and transmits the brightness-controlled RGB or YUV signals to the LCD module 30. The LCD module 30 transmits the brightness-controlled RGB or YUV signals to the LCD 40, so that the user may view the brightness-controlled image. In one embodiment, the gray level number is determined by bits of the YUV signal. For example, when the converted YUV signal has 18bits, the gray level number is 512.

Fig. 4 is a graph showing a relationship between gray levels and input voltages, according to an embodiment of the present invention.

Referring to Fig. 4, the gray levels are subdivided by brightness, the γ curve is controlled by the subdivided gray levels, and different input voltages are inputted by the controlled γ curve. For example, referring to Fig. 4, the gray levels between 256 and 257 are subdivided into B250, B251, etc. by using the maximum and minimum brightness values. The γ curve is then controlled by the subdivided gray levels. Furthermore, the input voltages are subdivided into X250, X251, etc. by the controlled γ curve.

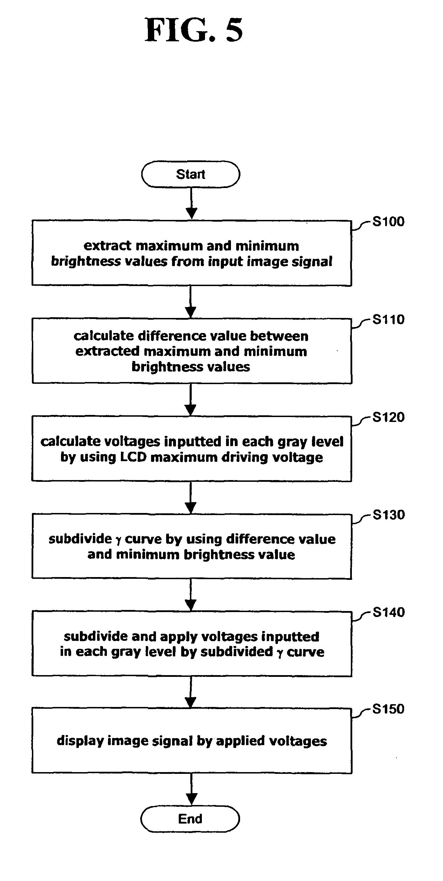

Fig. 5 is a flow diagram illustrating an image display method for an LCD device, according to an embodiment of the present invention.

The image display method for the LCD device will now be described in detail with reference to Figs. 3 and 5. In the example described below, it is assumed that the image input display device has 512 gray levels and the maximum voltage inputted to the LCD 40 is V.

When the user attempts to view the image inputted from the camera or the image stored in the storage device of the mobile terminal using the LCD 40, the mobile terminal extracts the maximum brightness value, Bmax, and the minimum brightness value, Bmin, from the image signal inputted to the data input unit 10. The mobile terminal also calculates the difference value (Bdiff=Bmax-Bmin) between the maximum brightness value Bmax and the minimum brightness value, Bmin, by using the extracted maximum and minimum brightness values Bmax and Bmin (S100 and S110). The voltages inputted in each gray level are calculated by dividing the LCD maximum driving voltage V by the gray level number (e.g., 512) (S120). One gray level is divided by the maximum grey level number (e.g., 512) by using the calculated difference value, Bdiff, and the minimum brightness value, Bmin. The subdivided brightness values of Bmin, Bmin+Bdiff/512, Bmin+2*Bdiff/512, Bmin+3*Bdiff/512, ..., Bmin+512*Bdiff/512 are mapped in the subdivided sections obtained by dividing the gray level by the maximum grey level number (S130). The γ curve is applied by brightness distribution maps obtained by mapping the subdivided brightness values. The voltage sections are then set by the applied γ curve. Furthermore, the voltages corresponding to the set voltage sections are transmitted (S150). For example, referring to Fig. 4, when the brightness values are subdivided into B250, B251, etc. in the gray levels between 256 and 257, the γ curve corresponding to the B250, B251, etc. is subdivided, and the input voltages X250, X251, etc. are inputted by the subdivided γ curves. The image signal having the subdivided brightness values is transmitted to the LCD module 30 by the applied voltages. The LCD module 30 transmits the brightness-controlled RGB or YUV signals to the LCD 40, so that the user may view the brightness-controlled image (S150).

In one embodiment, a display device comprises a data input unit configured to convert an image signal to a color signal. The display device also comprises a brightness control unit operationally coupled to the data input unit, configured to extract a brightness level associated with the color signal, to subdivide the brightness level associated with the color signal, and to apply different voltages according to brightness level subdivisions to control brightness of the color signal. The display device also comprises a display unit configured to display the color signal according to controlled brightness.

The brightness level may comprise gray levels of a γ curve. The color signal may comprise one of YUV or RGB signals. The brightness control unit may comprise means for extracting maximum and minimum brightness values of the color signal and means for subdividing the brightness level using the maximum and minimum brightness values. The brightness control unit may also comprise means for subdividing voltage sections associated with brightness level subdivisions and means for mapping brightness values associated with the brightness level subdivisions to the voltage sections. The brightness control unit may further comprise means for calculating a difference value between the maximum and minimum brightness values. The means for mapping the brightness values may obtain brightness distribution maps by mapping the brightness values one to one. The voltage sections may be set by the brightness distribution maps. The brightness may be controlled by applying voltages by set voltage sections. A number of voltage sections may be equal to a number of the brightness distribution maps. A number of voltage sections may be equal to a number of high distribution maps.

In another embodiment, a display method comprises converting an image signal to a color signal and extracting a brightness level associated with the color signal. The display method also comprises controlling brightness of the color signal by subdividing the brightness level and applying different voltages according to brightness level subdivisions. The display method also comprises displaying the color signal according to controlled brightness.

The step of controlling brightness of the color signal may comprise extracting maximum and minimum brightness values of the color signal and subdividing the brightness level using the maximum and minimum brightness values. The step of controlling brightness of the color signal may also comprise subdividing voltage sections associated with brightness level subdivisions and mapping brightness values associated with the brightness level subdivisions to the voltage sections. The step of controlling brightness of the color signal may further comprise calculating a difference value between the maximum and minimum brightness values. The step of mapping brightness values associated with the brightness level subdivisions to the voltage sections may further comprise obtaining brightness distribution maps by mapping the brightness values one to one.

In yet another embodiment, a mobile terminal configured to display images comprises a transceiver configured to transmit and receive signals and a display device operationally coupled to the transceiver. The display device comprises a data input unit configured to convert an image signal to a color signal. The display device also comprises a brightness control unit operationally coupled to the data input unit, configured to extract a brightness level associated with the color signal, to subdivide the brightness level associated with the color signal, and to apply different voltages according to brightness level subdivisions to control brightness of the color signal. The display device also comprises a display unit configured to display the color signal according to controlled brightness.

The image signal may be provided by the transceiver to the data input unit. The mobile terminal may further comprise a camera operationally coupled to the display device, configured to provide the image signal to the data input unit. The mobile terminal may further comprise a memory operationally coupled to the display device and the camera, configured to store image data associated with an image signal provided by the camera, the image data to provide an image signal to the data input unit.

In accordance with the present invention, the γ curve corresponding to the brightness level of the input image signal is subdivided into the maximum grey levels that may be displayed, and the driving voltages are applied to each cell by the subdivided γ curves. Therefore, characteristics of the γ curve of the LCD module may be improved, and the image may be displayed like a real image.

When the subdivision process is performed by the brightness distribution maps of the input image signal, the high distribution area is subdivided more than the low distribution area to improve the characteristics of the γ curve of the LCD module. A reference value or percent for deciding the degree of the distribution maps may be set to perform the subdivision process using the distribution maps.

Although the present invention has been described with reference to an image input display device for a mobile terminal, the image input display device may also be used in other applications, such as notebook computer screens.

It will be apparent to those skilled in the art that various modifications and variations may be made in the present invention without departing from the scope of the claims. Thus, it is intended that the present invention covers the modifications and variations of this invention provided they come within the scope of the appended claims and their equivalents.

## Claims

1. A display device, comprising:
- a data input (10) unit configured to convert an image signal to a color signal;
- a brightness control unit (50) operationally coupled to the data input unit (10), configured to extract a brightness level associated with the color signal, to subdivide the brightness level associated with the color signal, and to apply different voltages according to brightness level subdivisions to control brightness of the color signal; and
- a display unit (30) configured to display the color signal according to controlled brightness,
wherein the brightness is controlled by applying voltages by set voltage sections.

2. The display device of claim 1, wherein the brightness level comprises gray levels of a γ curve.

3. The display device of claim 1, wherein the color signal comprises one of YUV or RGB signals.

4. The display device of claim 1, wherein the brightness control unit (50) comprises:
- means for extracting maximum and minimum brightness values of the color signal;
- means for subdividing the brightness level using the maximum and minimum brightness values;
- means for subdividing voltage sections associated with brightness level subdivisions; and
- means for mapping brightness values associated with the brightness level subdivisions to the voltage sections.

5. The display device of claim 4, wherein the brightness control unit (50) further comprises means for calculating a difference value between the maximum and minimum brightness values.

6. The display device of claim 4, wherein the means for mapping the brightness values obtains brightness distribution maps by mapping the brightness values one to one.

7. The display device of claim 6, wherein the voltage sections are set by the brightness distribution maps.

8. The display device of claim 7, wherein a number of voltage sections is equal to a number of the brightness distribution maps.

9. A display method, comprising:
- converting an image signal to a color signal;
- extracting a brightness level associated with the color signal;
- controlling brightness of the color signal by subdividing the brightness level and applying different voltages according to brightness level subdivisions; and
- displaying the color signal according to controlled brightness,
wherein the brightness is controlled by applying voltages according to set voltage sections.

10. The display method of claim 9, wherein the brightness level comprises gray levels of a γ curve.

11. The display method of claim 9, wherein the color signal comprises one of YUV or RGB signals.

12. The display method of claim 9, wherein the step of controlling brightness of the color signal further comprises:
- extracting maximum and minimum brightness values of the color signal;
- subdividing the brightness level using the maximum and minimum brightness values;
- subdividing voltage sections associated with brightness level subdivisions; and
- mapping brightness values associated with the brightness level subdivisions to the voltage sections.

13. The display method of claim 9, wherein the step of controlling brightness of the color signal further comprises calculating a difference value between the maximum and minimum brightness values.

14. The display method of claim 12, wherein the step of mapping brightness values associated with the brightness level subdivisions to the voltage sections further comprises obtaining brightness distribution maps by mapping the brightness values one to one.

15. The display method of claim 14, wherein the voltage sections are set by the brightness distribution maps.

16. The display method of claim 9, wherein a number of voltage sections is equal to a number of the brightness distribution maps.

17. A mobile terminal configured to display images, the mobile terminal comprising:
- a transceiver configured to transmit and receive signals; and
- a display device according to anyone of claims 1 to 8 operationally coupled to the transceiver.

18. The mobile terminal of claim 17, wherein the brightness level comprises gray levels of a γ curve.

19. The mobile terminal of claim 17, wherein the color signal comprises one of YUV or RGB signals.

20. The mobile terminal of claim 17, wherein the image signal is provided by the transceiver to the data input unit.

21. The mobile terminal of claim 17, further comprising:
- a camera operationally coupled to the display device, configured to provide the image signal to the data input unit.

22. The mobile terminal of claim 21, further comprising:
- a memory operationally coupled to the display device and the camera, configured to store image data associated with an image signal provided by the camera, the image data to provide an image signal to the data input unit.

## Patentansprüche

1. Anzeigevorrichtung, mit:
- einer Dateneingabeeinheit (10), die dazu konfiguriert ist, ein Bildsignal in ein Farbsignal umzuwandeln,
- einer Helligkeitssteuereinheit (50), die betriebsfähig mit der Dateneingabeeinheit (10) gekoppelt und dazu konfiguriert ist, einen dem Farbsignal zugeordneten Helligkeitspegel zu extrahieren, den dem Farbsignal zugeordnete Helligkeitspegel zu unterteilen und entsprechend den Helligkeitspegelunterteilungen unterschiedliche Spannungen anzulegen, um die Helligkeit des Farbsignals zu regeln, und
- einer Anzeigeeinheit (30), die dazu konfiguriert ist, das Farbsignal gemäß der gesteuerten Helligkeit anzuzeigen,
wobei die Helligkeit durch Anlegen von Spannungen durch vorgegebene Spannungsabschnitte gesteuert wird.

2. Anzeigevorrichtung nach Anspruch 1,
bei der der Helligkeitspegel Grauwerte einer γ-Kurve umfasst.

3. Anzeigevorrichtung nach Anspruch 1,
bei der das Farbsignal YUV- oder RGB-Signale umfasst.

4. Anzeigevorrichtung nach Anspruch 1,
bei der die Helligkeitssteuereinheit (50) umfasst:
- eine Einrichtung zum Extrahieren maximaler und minimaler Helligkeitswerte des Farbsignals,
- eine Einrichtung zum Unterteilen des Helligkeitspegels unter Verwendung der maximalen und minimalen Helligkeitswerte,
- eine Einrichtung zum Unterteilen von den Helligkeitspegelunterteilungen zugeordneten Spannungsabschnitten, und
- eine Einrichtung zum Zuweisen von den Helligkeitspegelunterteilungen zugeordneten Helligkeitswerten zu den Spannungsabschnitten.

5. Anzeigevorrichtung nach Anspruch 4,
bei der die Helligkeitssteuereinheit (50) ferner eine Einrichtung zum Berechnen eines Differenzwerts zwischen den maximalen und minimalen Helligkeitswerten umfasst.

6. Anzeigevorrichtung nach Anspruch 4,
bei der die Einrichtung zum Zuweisen der Helligkeitswerte Helligkeitsverteilungszuweisungen erhält, indem die Helligkeitswerte eins zu eins zugewiesen werden.

7. Anzeigevorrichtung nach Anspruch 6,
bei der die Spannungsabschnitte durch die Helligkeitsverteilungszuweisungen vorgegeben werden.

8. Anzeigevorrichtung nach Anspruch 7,
bei der eine Anzahl von Spannungsabschnitten gleich einer Anzahl der Helligkeitsverteilungszuweisungen ist.

9. Anzeigeverfahren, das umfasst:
- Umwandeln eines Bildsignals in ein Farbsignal,
- Extrahieren eines dem Farbsignal zugeordneten Helligkeitspegels,
- Steuern der Helligkeit des Farbsignals durch Unterteilen des Helligkeitspegels und Anlegen unterschiedlicher Spannungen entsprechend den Helligkeitspegelunterteilungen, und
- Anzeigen des Farbsignals gemäß der gesteuerten Helligkeit,
wobei die Helligkeit durch Anlegen von Spannungen gemäß vorgegebenen Spannungsabschnitten gesteuert wird.

10. Anzeigeverfahren nach Anspruch 9,
bei dem der Helligkeitspegel Grauwerte einer γ-Kurve umfasst.

11. Anzeigeverfahren nach Anspruch 9,
bei dem das Farbsignal YUV- oder RGB-Signale umfasst.

12. Anzeigeverfahren nach Anspruch 9,
bei dem der Schritt des Steuerns der Helligkeit des Farbsignals ferner umfasst:
- Extrahieren maximaler und minimaler Helligkeitswerte des Farbsignals,
- Unterteilen des Helligkeitspegels unter Verwendung der maximalen und minimalen Helligkeitswerte,
- Unterteilen von den Helligkeitspegelunterteilungen zugeordneten Spannungsabschnitten, und
- Zuweisen von den Helligkeitspegelunterteilungen zugeordneten Helligkeitswerten zu den Spannungsabschnitten.

13. Anzeigeverfahren nach Anspruch 9,
bei dem der Schritt des Steuerns der Helligkeit des Farbsignals ferner das Berechnen eines Differenzwerts zwischen den maximalen und minimalen Helligkeitswerten umfasst.

14. Anzeigeverfahren nach Anspruch 12,
bei dem der Schritt des Zuweisens von den Helligkeitspegelunterteilungen zugeordneten Helligkeitswerten zu den Spannungsabschnitten das Erhalten von Helligkeitsverteilungszuweisungen umfasst, indem die Helligkeitswerte eins zu eins zugewiesen werden.

15. Anzeigeverfahren nach Anspruch 14,
bei dem die Spannungsabschnitte durch die Helligkeitsverteilungszuweisungen vorgegeben werden.

16. Anzeigeverfahren nach Anspruch 9,
bei dem eine Anzahl von Spannungsabschnitten gleich einer Anzahl der Helligkeitsverteilungszuweisungen ist.

17. Mobiles Endgerät, das zum Anzeigen von Bildern konfiguriert ist, wobei der mobile Bildschirm umfasst:
- einen Transceiver, der dazu konfiguriert ist, Signale zu senden und zu empfangen, und
- eine Anzeigevorrichtung nach einem der Ansprüche 1 bis 8, die betriebsfähig mit dem Transceiver gekoppelt ist.

18. Mobiles Endgerät nach Anspruch 17,
bei dem der Helligkeitspegel Grauwerte einer γ-Kurve umfasst.

19. Mobiles Endgerät nach Anspruch 17,
bei dem das Farbsignal YUV- oder RGB-Signale umfasst.

20. Mobiles Endgerät nach Anspruch 17,
bei dem das Bildsignal durch den Transceiver der Dateneingabeeinheit zugeführt wird.

21. Mobiles Endgerät nach Anspruch 17,
das ferner umfasst:
- eine betriebsfähig mit der Anzeigevorrichtung gekoppelte Kamera, die dazu konfiguriert ist, das Bildsignal der Dateneingabeeinheit zuzuführen.

22. Mobiles Endgerät nach Anspruch 21,
der ferner umfasst:
- einen betriebsfähig mit der Anzeigevorrichtung und der Kamera gekoppelten Speicher, der dazu konfiguriert ist, Bilddaten, die einem durch die Kamera bereitgestellten Bildsignal zugeordnet sind, zu speichern, wobei die Bilddaten, dazu vorgesehen sind, der Dateneingabeeinheit ein Bildsignal zuführen.

## Revendications

1. Dispositif d'affichage, comprenant :
- une unité (10) d'entrée de données configurée pour convertir un signal d'image en un signal couleur ;
- une unité (50) de commande de brillance couplée en fonctionnement avec l'unité (10) d'entrée de données, configurée pour extraire un niveau de brillance associé avec le signal couleur, pour subdiviser le niveau de brillance associé avec le signal en couleur et pour appliquer des tensions différentes en fonction des subdivisions du niveau de brillance afin de commander la brillance du signal couleur ; et
- une unité (30) d'affichage configurée pour afficher le signal couleur en conformité avec la brillance commandée,
dans lequel la brillance est commandée par application de tensions par des sections de réglage de tension.

2. Dispositif d'affichage selon la revendication 1, dans lequel le niveau de brillance comprend les niveaux de gris d'une courbe γ.

3. Dispositif d'affichage selon la revendication 1, dans lequel le signal couleur comprend des signaux soit YUV soit RGB.

4. Dispositif d'affichage selon la revendication 1, dans lequel l'unité (50) de commande de brillance comprend :
- un moyen d'extraction des valeurs maximale et minimale de la brillance du signal couleur ;
- un moyen de subdivision du niveau de brillance au moyen des valeurs maximale et minimale de la brillance ;
- un moyen de subdivision en sections de tensions associées avec les subdivisions du niveau de brillance ; et
- un moyen de cartographie des valeurs de brillance associées avec les subdivisions du niveau de brillance dans les sections de tension.

5. Dispositif d'affichage selon la revendication 4, dans lequel l'unité (50) de commande de brillance comprend en outre un moyen de calcul d'une valeur de différence entre les valeurs maximale et minimale de la brillance.

6. Dispositif d'affichage selon la revendication 4, dans lequel le moyen de cartographie des valeurs de brillance obtient des cartes de répartition de brillance par cartographie des valeurs de brillance une à une.

7. Dispositif d'affichage selon la revendication 6, dans lequel les sections de tension sont déterminées par les cartes de répartition de brillance.

8. Dispositif d'affichage selon la revendication 7, dans lequel le nombre de sections de tension est égal au nombre de cartes de répartition de brillance.

9. Procédé d'affichage, comprenant :
- convertir un signal d'image en un signal couleur ;
- extraire un niveau de brillance associé avec le signal couleur ;
- commander la brillance du signal couleur par subdivision du niveau de brillance et application de tensions différentes en fonction des subdivisions du niveau de brillance ; et
- afficher le signal couleur en conformité avec la brillance commandée,
dans lequel la brillance est commandée par application de tensions en conformité avec les sections de réglage de tension.

10. Procédé d'affichage selon la revendication 9, dans lequel le niveau de brillance comprend les niveaux de gris d'une courbe γ.

11. Procédé d'affichage selon la revendication 9, dans lequel le signal couleur comprend des signaux soit YUV soit RGB.

12. Procédé d'affichage selon la revendication 9, dans lequel l'étape de commande de la brillance du signal couleur comprend en outre :
- extraire les valeurs maximale et minimale de la brillance du signal couleur ;
- subdiviser le niveau de brillance au moyen des valeurs maximale et minimale de la brillance ;
- subdiviser en sections de tensions associées avec les subdivisions du niveau de brillance ; et
- cartographier les valeurs de brillance associées avec les subdivisions du niveau de brillance dans les sections de tension.

13. Procédé d'affichage selon la revendication 9, dans lequel l'étape de commande de la brillance du signal couleur comprend en outre le calcul d'une valeur de différence entre les valeurs maximale et minimale de la brillance.

14. Procédé d'affichage selon la revendication 12, dans lequel l'étape de cartographie des valeurs de brillance associées avec les subdivisions du niveau de brillance dans les sections de tension comprend en outre l'obtention de cartes de répartition de brillance par cartographie des valeurs de brillance une à une.

15. Procédé d'affichage selon la revendication 14, dans lequel les sections de tension sont déterminées par les cartes de répartition de brillance.

16. Procédé d'affichage selon la revendication 9, dans lequel le nombre de sections de tension est égal au nombre de cartes de répartition de brillance.

17. Terminal mobile configuré pour afficher des images, le terminal mobile comprenant :
- un émetteur-récepteur configuré pour émettre et recevoir des signaux ; et
- un dispositif d'affichage selon l'une quelconque des revendications 1 à 8, couplé en fonctionnement avec l'émetteur-récepteur.

18. Terminal mobile selon la revendication 17 dans lequel le niveau de brillance comprend les niveaux de gris d'une courbe γ.

19. Terminal mobile selon la revendication 17, dans lequel le signal couleur comprend des signaux soit YUV soit RGB.

20. Terminal mobile selon la revendication 17, dans lequel le signal d'image est délivré par l'émetteur-récepteur à l'unité d'entrée de données.

21. Terminal mobile selon la revendication 17, comprenant en outre :
- une caméra couplée en fonctionnement avec le dispositif d'affichage, configurée pour délivrer le signal d'image à l'unité d'entrée de données.

22. Terminal mobile selon la revendication 21, comprenant en outre :
- une mémoire couplée en fonctionnement avec le dispositif d'image et la caméra, configurée pour mémoriser les données d'image associées avec un signal d'image délivré par la caméra, les données d'image fournissant un signal d'image à l'unité d'entrée de données.
